**Europäisches Patentamt**

**European Patent Office**

**Office européen des brevets**

(19)

(11) **EP 1 396 971 A1**

(12) **EUROPEAN PATENT APPLICATION**

(43) Date of publication:
   **10.03.2004 Bulletin 2004/11**

(51) Int Cl.⁷: **H04L 27/26**

(21) Application number: **02405769.7**

(22) Date of filing: **05.09.2002**

(84) Designated Contracting States:
   **AT BE BG CH CY CZ DE DK EE ES FI FR GB GR IE IT LI LU MC NL PT SE SK TR**
   Designated Extension States:
   **AL LT LV MK RO SI**

(71) Applicant: **ABB RESEARCH LTD.**
   **8050 Zürich (CH)**

(72) Inventors:
   • **Dzung, Dacfey**
     **5430 Wettingen (CH)**

   • **Svensson, Erik**
     **8006 Zürich (CH)**

(74) Representative: **ABB Patent Attorneys**
   **c/o ABB Schweiz AG,**
   **Intellectual Property (CH-LC/IP),**
   **Brown Boveri Strasse 6**
   **5400 Baden (CH)**

(54) **Method for demodulating OFDM signals with sampling rate mismatch**

(57)   The problem to by solved by the invention is to provide a method for demodulating OFDM signals that is able to compensate for sampling rate mismatch between sender and receiver. The solution is based on a mathematical analysis of the effects of a sampling rate mismatch. This analysis shows a way to find an optimum solution for the received values in the least squares sense.

**Fig. 1**

**Description**

<u>Technical Field</u>

The present invention relates to a device and a method for demodulating orthogonal frequency division multiplexing (OFDM) signals according to the preamble of the independent claims.

<u>Background Art</u>

Demodulation of OFDM is sensitive to errors in clock and carrier phase and frequency. Specifically, errors in the sampling clock frequency lead to large demodulation errors if not compensated, in particular for long symbol durations. A direct method to compensate such errors applies appropriate sampling rate interpolators. Interpolation may however require a high processing effort. Also, this ad-hoc method is non-optimum in general.

<u>Disclosure of the Invention</u>

Hence, the problem to be solved by the present invention is to provide a method and a device for demodulating OFDM signals that are able to compensate for sampling rate mismatch.
This problem is solved by the independent claims. As described in the following, the solution is based on a mathematical analysis of the effects of a sampling rate mismatch. This analysis shows a way to find an optimum solution for the received values, i.e. a solution that minimizes the expectation value of the e.g. squared error of the solution.
Preferred embodiments of the invention are described in the dependent claims.

<u>Brief Description of the Drawings</u>

The invention will be better understood and objects other than those set forth above will become apparent when consideration is given to the following detailed description thereof. Such description makes reference to the annexed drawings, wherein:

   Fig. 1 is a block diagram of an OFDM transmitter and
   Fig. 2 is a block diagram of an OFDM receiver.

<u>Modes for Carrying Out the Invention</u>

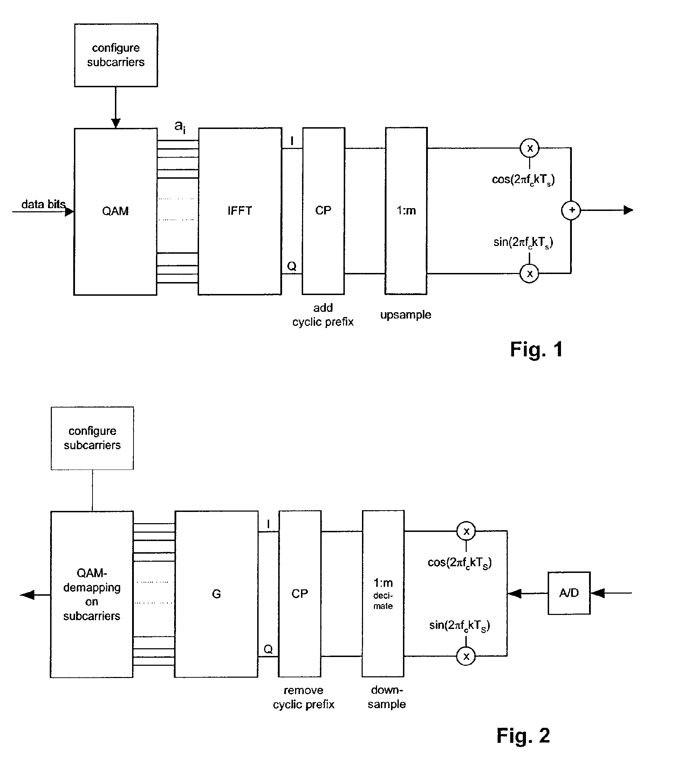

Note: In the following "~" denotes a complex number and "^" denotes signals at the receiver side.
The block diagram of an OFDM transmitter is shown in Fig. 1. It comprises a quadrature amplitude modulator QAM for mapping blocks of incoming data bits onto N channels using quadrature modulation, wherein a complex amplitude $a_i$ with $-N/2 \leq i < N$ is attributed to channel $i$ as known to a person skilled in the art. In most cases, some of the channels are not used and therefore only $l \leq N$ values $a_i$ are $\neq 0$.
The amplitudes $a_i$ are fed to an inverse Fourier transform generator IFFT for calculating the components

$$\tilde{x}_k = \sum_i a_i \cdot e^{j2\pi \frac{ik}{N}} . \qquad (1)$$

With the definition of the vector $\underline{\tilde{x}} = [\tilde{x}_0, \tilde{x}_1, .. \tilde{x}_{N-1}]'$ and $\underline{a} = [..a_i..]'$, (1) can be written as

$$\underline{\tilde{x}} = C\underline{a}, \qquad (2)$$

where C is the Inverse Discrete Fourier Transform IDFT matrix. For transmission over a continuous transmission line, a time-continuous complex signal $\tilde{x}(t)$ is generated by interpolation and up-sampling, such that $\tilde{x}_k = \tilde{x}(kT)$, wherein $T$ is the sampling time, i.e.

$$\tilde{x}(t) \;=\; \sum_{i} a_i \cdot e^{j2\pi \frac{i}{NT} t} \tag{3}$$

is the complex envelope of the modulated signal

$$x(t) \;=\; \mathrm{Re}\,(\tilde{x}(t))\cos 2\pi f_c t \;-\; \mathrm{Im}\,(\tilde{x}(t))\sin 2\pi f_c t \;=\; \mathrm{Re}\!\left(\tilde{x}(t)e^{j2\pi f_c t}\right). \tag{4}$$

This modulated signal $x(t)$ is transmitted over the transmission line.

The receiver shown in Fig. 2 receives the signal

$$y(t) = x(t) + n(t), \tag{5}$$

where $n(t)$ denotes the additive noise and where it is assumed that the transmission line shows no damping or dispersion.

Quadrature down-mixing involves multiplication of $y(t)$ by $cos(2\pi f_c t)$ and $sin(2\pi f_c t)$ and low-pass filtering as known to the person skilled in the art. It is most convenient to write the result in complex form as

$$\tilde{y}(t) \;=\; y(t)\cos(2\pi f_c t + \phi_c) \;-\; j y(t)\sin(2\pi f_c t + \phi_c), \tag{6}$$

with a signal delay error $\tau$ and a carrier phase error $\phi_C$.

In a fully digital implementation, $y(t)$ is first sampled at instants $kT_s$ and analog-to-digital converted. The sampling rate $1/T_s$ is given by the oversampling factor $m$,

$$m = \frac{1/T_s}{1/T}, \tag{7}$$

where usually $m >> 1$, so that $1/T << 1/T_s$. In practice, there will be a sampling frequency error at the receiver, so that the actual sampling rate is

$$\frac{1}{\hat{T}_s} = \frac{1}{T_s}(1 + \varepsilon), \tag{8}$$

where the relative sampling rate (clock rate) mismatch $\varepsilon$ is in the order of $\pm 100$ ppm for practical systems. Therefore, y(t) is sampled at multiples of $\hat{T}_s$ ($\neq T_s$) and possibly with a signal delay error $\tau$ and a carrier phase error $\phi_C$, so that the sampled values are $y_k = y(k\hat{T}_s - \tau)$. The sequence $y_k$ is down-mixed by digital multiplication, i.e.

$$\tilde{y}_k \;=\; y(k\hat{T}_s - \tau)\cos(2\pi f_c kT_s + \phi_c) \;-\; j y(k\hat{T}_s - \tau)\sin(2\pi f_c kT_s + \phi_c). \tag{9}$$

Note in particular that the cos- and sin-factors used in the receiver down-mixing assume the same sampling period $T_s$ as in the transmitter, while $y(t)$ is sampled at multiples of $\hat{T}_s$, as written in (9). Collecting (9) and (5), inserting the OFDM representation (3) and (4) for the signal part of $\tilde{y}_k$, and retaining only the low-pass filtered components, yields

$$\tilde{Y}_k = \frac{1}{2} \sum_i a_i \cdot e^{j2\pi i \frac{1}{NT}(k\hat{T}_s - \tau)} \cdot e^{j2\pi f_c(k\hat{T}_s - \tau)} \cdot e^{-j(2\pi f_c k T_s + \phi_c)} + \tilde{n}_k \qquad (10)$$

For further processing this signal can be down-sampled by the factor $m$, i.e. by considering only samples at $k:=km$. These samples $\tilde{Y}_{km}$ can then be written as, on using (7) and (8),

$$\tilde{Y}_k = \frac{1}{2} \sum_i a_i \cdot e^{j2\pi \frac{ik}{N} \frac{1}{1+\varepsilon}} \cdot e^{-j2\pi \frac{i}{NT}\tau} \cdot e^{-j2\pi \frac{\varepsilon f_c}{1+\varepsilon} kT} \cdot e^{-j(2\pi f_c \tau + \phi_c)} + \tilde{n}_k \qquad (11)$$

OFDM symbol synchronization selects an appropriate window of $N$ samples $\underline{\tilde{Y}} = [\tilde{y}_0, \tilde{y}_1, \dots \tilde{y}_{N-1}]'$. Then (11) can be written as

$$\underline{\tilde{y}} = \tilde{C}\underline{a} + \underline{\tilde{n}}, \qquad (12)$$

where the $(i,k)$-th element of the $N \times I$ matrix $\tilde{c}$ is

$$\tilde{c}_{ik} = \frac{1}{2} e^{j2\pi \frac{ik}{N} \frac{1}{1+\varepsilon}} \cdot e^{-j2\pi \frac{i}{NT}\tau} \cdot e^{-j2\pi \frac{\varepsilon f_c}{1+\varepsilon} kT} \cdot e^{-j(2\pi f_c \tau + \phi_c)} \qquad (13)$$

The first factor on the right-hand-side of (13) is the non-trivial part, since it destroys for $\varepsilon \neq 0$ the IDFT property of $\tilde{C}$. However, the important fact is that the received sample vector $\underline{\tilde{Y}}$ is still a linear function of the original data signal $\underline{a}$, despite errors due to synchronisation and sampling frequency offset.

The other factors of (13) are essentially trivial, expressing the signal delay error $\tau$ and the carrier phase mismatch $\phi_c$. They may be set to 0 if they are compensated in separate steps, by proprer pre- and post-processing as it is known to a person skilled in the art.

The frequency error $\varepsilon$ as well as the signal delay error $\tau$ and carrier phase error and $\phi_c$ for calculating the coefficients of equation (13) can be estimated in calibration measurements before or during data transmission. In the context of the present invention, it is assumed that $\varepsilon$ is not zero.

For solving equation (12), standard linear estimation theory can be used for estimating the values of $\underline{a}$. The linear minimum mean square error estimate $\hat{\underline{a}}$ has the form

$$\hat{\underline{a}} = G\underline{\tilde{y}}, \qquad (14)$$

where $G$ is a $I \times N$ matrix to be determined such that

$$\min_G E \sum |a_i - \hat{a}_i|^2 = \min_G E \|\underline{a} - \hat{\underline{a}}\|^2 = \min_G E \|\underline{a} - G\underline{\tilde{y}}\|^2 \qquad (15)$$

where $E(x)$ denotes the statistical expectation value of $x$.

The Orthogonality Principle(see B.D.O. Anderson and J.B. Moore, Optimal Filtering, Prentice-Hall, 1979) requires that $G$ is chosen such that the error is orthogonal to $\underline{\tilde{y}}^{+'}$, i.e.

$$E\left(\underline{a} - G\underline{\tilde{y}})\underline{\tilde{y}}^{+}\right) = 0 \qquad (16)$$

or

$$E(\underline{a}\ \underline{\tilde{y}}^{+}) = G \cdot E(\underline{\tilde{y}}\ \underline{\tilde{y}}^{+}) \ . \qquad (17)$$

This equation determines $G$. Using (12) and evaluating the expectations with respect to the signal $\underline{a}$ and noise $\underline{n}$ then yields

$$G \cdot (\tilde{C}R_a\tilde{C}^{+} + R_n) = R_a\tilde{C}^{+} \ , \qquad (18)$$

where the correlation matrices

$$R_a = E(\underline{a}\ \underline{a}^{+}) \text{ and } R_n = E(\underline{\tilde{n}}\ \underline{\tilde{n}}^{+}) \qquad (19)$$

are assumed to be known. $R_a$ can e.g. be statistically derived from the known distribution of the values $a_i$, and $R_n$ can be estimated using calibration measurements of the transmission line.

(18) determines $G$, and (14) gives the rule to finally compute an MMSE estimate $\underline{\hat{a}}$ from the received signal $\underline{\tilde{y}}$ after sampling and down-mixing.

As a check, consider the case where $R_n = 0$ and $R_a\tilde{C}^{+}$ is invertible. Then, from (18),

$$G = \tilde{C}^{-1} \ , \qquad (20)$$

as to be expected from (2) and (14). Now if in addition $\varepsilon = 0$, then $\tilde{C} = C$, apart from trivial factors (see (13)), and the inverse is simply the DFT matrix, thus allowing efficient calculation of $\underline{\hat{a}}$ by an FFT. This is the standard OFDM demodulation method.

Equation (18) is our generalization. The matrix $G$ is of size $I \times N$, where $I$ ($\leq N$) is the number of non-zero entries in $\underline{a}$, and $N$ size of the DFT in (1). Given $G$, the computational effort for this optimum demodulator is therefore proportional to $I$. Fast methods to solve (18) are known (see B.D.O. Anderson et al, as mentioned above). However, for $\varepsilon \neq 0$, there is no known method to compute $\underline{\hat{a}}$ in (14) as efficiently as via an FFT.

In more general terms, the present invention involves an approximative solution $\underline{\hat{a}}$ for the (usually overdetermined) equation (12) with the noise set to zero, i.e. an approximative solution $\underline{\hat{a}}$ for

$$\underline{\tilde{y}} = \tilde{C}\underline{\hat{a}} \ , \qquad (21)$$

In the example above, this was done by minimizing the expectation value

$$E\|\underline{a} - \underline{\hat{a}}\|^{2} \qquad (22)$$

for $\underline{a}$ as defined by equation (12).

A solution fulfilling equation (21) is an optimum solution in the least squares sense.

Various methods for performing this task are known if the expectation values $R_a$ and $R_n$ of equation (19) are known. One such method has been described in the context of equations (15) - (18).

In equation (5) it has been assumed that there is no attenuation or dispersion in the transmission line. If a (complex) frequency dependent attenuation $h(f)$ is present, it can be shown that equation (13) becomes

$$\tilde{c}_{ik} = \frac{h_i}{2} e^{j2\pi \frac{ik}{N} \frac{1}{1+\varepsilon}} \cdot e^{-j2\pi \frac{i}{NT}\tau} \cdot e^{-j2\pi \frac{\varepsilon f_c}{1+\varepsilon} kT} \cdot e^{-j(2\pi f_c \tau + \phi_c)} \qquad (22)$$

with $h_i$ being the complex attenuation in channel $i$, which can be estimated from calibration measurements. The method described above can therefore be generalized by using equation (22) instead of (13).

Symbols:

| | |
|---|---|
| $a_i$: | channel amplitude |
| $C$: | inverse discrete Fourier transform matrix |
| $\tilde{c}$ : | see equation (13) |
| $E(x)$: | expectation value of $x$ |
| $f_c$: | carrier frequency |
| $G$: | see equation (14) |
| $i$: | channel index |
| $l$: | number of channels used |
| $m$: | oversampling factor |
| $n$: | channel noise |
| $N$: | maximum number of channels |
| $R_n, R_a$: | correlation matrices of noise and channel amplitudes |
| $t$: | time |
| $T$: | sampling time |
| $T_s$: | sampling time after upsampling |
| $x$: | transmitted signal |
| $y$: | received signal |
| $\varepsilon$: | sampling rate mismatch |
| $\phi_C$: | carrier phase error |
| $\tau$: | signal delay error |

**Claims**

1. A method for demodulating an OFDM signal, where blocks of $l$ values $a_i$ are sent by a sender through a plurality $N$ of channels and received by a receiver comprising the steps of

     calculating the values

$$\tilde{c}_{ik} = \frac{h_i}{2} e^{j2\pi \frac{ik}{N} \frac{1}{1+\varepsilon}} \cdot e^{-j2\pi \frac{i}{NT}\tau} \cdot e^{-j2\pi \frac{\varepsilon f_c}{1+\varepsilon} kT} \cdot e^{-j(2\pi f_c \tau + \phi_c)}$$

     where

   - $\varepsilon \neq 0$ is a relative mismatch between a clock rate of the receiver and a clock rate of the sender
   - $\tau$ is 0 or a signal delay error between the sender and the receiver,
   - $\phi_C$ is a carrier phase error between the sender and the receiver
   - $h_i$ is 1 or a complex attenuation of channel $i$,

     and finding an approximative solution $\underline{\hat{a}}$ to the equation

$$\underline{\tilde{y}} = \tilde{C}\underline{\hat{a}} .$$

where $\tilde{C}$ is a matrix of the values $\tilde{c}_{i,k}$ .

2.  The method of claim 1 wherein said solution $\underline{\hat{a}}$ is found by minimizing the expectation value $E\|\underline{a} - \underline{\hat{a}}\|^2$ for equation

$$\underline{\tilde{y}} = \tilde{C}\underline{a} + \underline{\tilde{n}} ,$$

wherein $\underline{\tilde{n}}$ is a vector describing the noise in each channel.

3.  The method of claim 2 wherein said solution $\underline{\hat{a}}$ is calculated from

$$\underline{\hat{a}} = G\underline{\tilde{y}}$$

with a matrix G fulfilling

$$G \cdot (\tilde{C}R_a\tilde{C}^+ + R_n) = R_a\tilde{C}^+ ,$$

wherein $R_a$ and $R_n$ are expectation values

$$R_a = E(\underline{a}\ \underline{a}^+) \text{ and } R_n = E(\underline{\tilde{n}}\ \underline{\tilde{n}}^+). \tag{19}$$

4.  The method of any of the preceding claims wherein at least one of the values $\varepsilon$, $\tau$, $\phi_C$ and/or $h_i$ is estimated in a calibration measurement.

5.  A device for demodulating an OFDM signal comprising means for carrying out the steps of the method of any of the preceding claims.

**Fig. 1**

**Fig. 2**

EP 1 396 971 A1

European Patent
Office

**EUROPEAN SEARCH REPORT**

Application Number

EP 02 40 5769

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 683 576 A (HITACHI LTD) 22 November 1995 (1995-11-22) * page 5, line 1 - line 18 * * page 7, line 1 - page 8, line 11 * * page 9, line 57 - page 10, line 17 * * page 12, line 11 - line 25 * | 1,4,5 | H04L27/26 |
| Y | | 2,3 | |
| Y | WO 02 067527 A (KONINKL PHILIPS ELECTRONICS NV) 29 August 2002 (2002-08-29) * page 4, expresson (1) * * page 4, line 22 - line 26 * * page 9, line 9 - line 23 * * page 11, line 23 - line 32 * | 2,3 | |
| A | SLISKOVIC M: "CARRIER AND SAMPLING FREQUENCY OFFSET ESTIMATION AND CORRECTION IN MULTICARRIER SYSTEMS" 2001 IEEE GLOBAL TELECOMMUNICATIONS CONFERENCE, vol. 1 OF 6, 25 - 29 November 2001, pages 285-289, XP001090262 IEEE, NEW YORK, USA ISBN: 0-7803-7206-9 * the whole document * | 1,5 | TECHNICAL FIELDS SEARCHED (Int.Cl.7) H04L |
| A | EP 0 836 304 A (ALPINE ELECTRONICS INC) 15 April 1998 (1998-04-15) * page 3, line 44 - page 5 * | 1,5 | |

The present search report has been drawn up for all claims

| Place of search | Date of completion of the search | Examiner |
|---|---|---|
| THE HAGUE | 11 February 2003 | Moreno, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

## ANNEX TO THE EUROPEAN SEARCH REPORT
## ON EUROPEAN PATENT APPLICATION NO.

EP 02 40 5769

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2003

| Patent document cited in search report | | Publication date | Patent family member(s) | | Publication date |
|---|---|---|---|---|---|
| EP 0683576 | A | 22-11-1995 | JP | 2989742 B2 | 13-12-1999 |
| | | | JP | 7321763 A | 08-12-1995 |
| | | | EP | 1267537 A2 | 18-12-2002 |
| | | | EP | 0683576 A1 | 22-11-1995 |
| WO 02067527 | A | 29-08-2002 | WO | 02067527 A2 | 29-08-2002 |
| | | | US | 2002146063 A1 | 10-10-2002 |
| EP 0836304 | A | 15-04-1998 | JP | 10126353 A | 15-05-1998 |
| | | | EP | 0836304 A2 | 15-04-1998 |

EPO FORM P0459

For more details about this annex : see Official Journal of the European Patent Office, No. 12/82